# EUROPEAN PATENT SPECIFICATION

(11) **EP 4 099 457 B1**
(45) Date of publication and mention of the grant of the patent: **29.01.2025**
(21) Application number: 22177144.7
(22) Date of filing: 03.06.2022
(51) Int. Cl.: H01M 10/04, H01M 50/103, H01M 50/15, H01M 50/528, H01M 50/533, H01M 50/536, H01M 10/613, H01M 10/647, H01M 10/6556, H01M 50/209, H01M 50/242

(54) **COVER PLATE ASSEMBLY FOR BATTERY AND BATTERY DEVICE**
ABDECKPLATTE FÜR BATTERIE UND BATTERIEVORRICHTUNG
ENSEMBLE PLAQUE DE COUVERTURE POUR BATTERIE ET DISPOSITIF DE BATTERIE

(30) Priority: 03.06.2021 CN 202110618699
(43) Date of publication of application: 07.12.2022
(73) Proprietor: Gree Altairnano New Energy Inc., Zhuhai, Guangdong (CN)
(72) Inventor: XU, Delei, ZHUHAI, GUANGDONG, 519040 (CN); LI, Haijun, ZHUHAI, GUANGDONG, 519040 (CN); CHENG, Ahong, ZHUHAI, GUANGDONG, 519040 (CN); ZHAN, Shiying, ZHUHAI, GUANGDONG, 519040 (CN); LAI, Xinhua, ZHUHAI, GUANGDONG, 519040 (CN); DENG, Saijun, ZHUHAI, GUANGDONG, 519040 (CN)
(74) Representative: Glawe, Delfs, Moll

(56) References cited:
- EP-A2- 2 343 752
- WO-A1-2013/032082
- WO-A1-2019/195985
- WO-A1-2020/120081
- CN-U- 209 658 246
- US-A1- 2020 251 694

## Description

### Cross-Reference to Related Application(s)

The present invention claims priority to patent application No. 202110618699.8, filed to the China National Intellectual Property Administration on June 03, 2021 and entitled "Cover Plate Assembly for Battery and Battery Device".

### Technical Field

The invention relates to the technical field of lithium batteries, and in particular to a cover plate assembly for a battery and a battery device.

### Background

With the new energy industry developing continuously, the lithium ion batteries are applied increasingly widespread. For example, the lithium ion batteries are generally used in digital products, electric vehicles, and energy storage charge systems. The lithium ion battery consists of a case, a cover plate assembly, cells, an electrolyte, and other auxiliary connectors. In addition to forming a sealing cavity with the case for sealing, that is, preventing moisture and other impurities in an air from entering the battery, the cover plate assembly is also required to be connected to the cells. Generally, the poles of the cover plate assembly are directly or indirectly connected to the tabs of the cells, to form a closed conductive path.

In an art known to the inventors, the tabs and the poles are generally connected through soft connection structures. The soft connection structures generally consist of one or more layers of thin conductive sheets in different shapes. One ends of the soft connection structures are directly welded to the tabs, and the other ends of the soft connection structures are directly welded to the poles. Although one closed conductive path is formed in the battery, the soft connection structures are in surface-to-surface contact with the tabs. The gaps are likely to be caused between the soft connection structures and the tabs, so that after direct welding, the explosion points, the missing welding, the incomplete welding, etc are likely to be caused.

A large-capacity secondary battery is provided in D1(WO2013032082A1).

An energy storage cell, production method and apparatus for carrying out the method is provided in D2 (WO2020120081A1).

### Summary

The invention is defined by the appended claims.

Some embodiments of the invention provide a battery device comprising a cover plate assembly to solve the problems that when connection structures of a cover plate assembly for a battery in the prior art are welded to tabs subsequently, explosion points, missing welding, incomplete welding, etc. are likely to be caused. To realize the objective described above, in one embodiment of the invention, provided is a battery device, comprising a cell and a cover plate assembly for the battery connected with the cell, wherein the cell comprises roll cores and tabs connected with the roll cores, wherein the cover plate assembly for the battery, includes a top cover;
a conductive structure arranged on the top cover, the conductive structure including at least one pole for conducting electricity; at least one connection structure, a first end of each connection structure being electrically connected with a corresponding pole in the at least one pole, a second end of the connection structure being electrically connected with a tab of a cell, and the second end of the each connection structure being provided with an installation hole; and a locking structure including at least one locking member, each locking member penetrating the tab to be fixedly connected to the installation hole, to lock the tab on the connection structure correspondingly, the tabs being connected with the poles through connection structures and the locking structure.

In the invention, the each connection structure includes a first connector and a second connector connected to each other, an included angle being provided between the first connector and the second connector, the first connector forming the first end, and the second connector forming the second end.

In some embodiments, the first connector and the second connector each include conductive members having predetermined thicknesses.

In the invention, at least one side of the second connector is provided with a groove for installing the tab.

In some embodiments, the each connection structure further includes a connection groove arranged on the first connector, the connection groove being positioned on a side, away from the pole, of the first connector.

In some embodiments, the each locking member includes a locking body and an end cap connected with the locking body, the locking body having a diameter smaller than the end cap, a first step surface being provided between the locking body and the end cap, and the locking body being connected with the installation hole; or, the second connector of the connection structure is welded to the tab.

In some embodiments, the locking structure further includes a clamping plate, the clamping plate being provided with a first assembly through hole corresponding to the installation hole, and a part of the each locking member penetrating the first assembly through hole and the tab to be riveted or connected through threads to the installation hole.

In some embodiments, the first assembly through hole includes a first hole section and a second hole section communicating with each other, the first hole section having a diameter smaller than the second hole section, a second step surface being provided between the first hole section and the second hole section, and a first step surface of a corresponding locking member in the locking members abutting against the second step surface.

In some embodiments, the top cover is provided with at least one first installation through hole, and each pole includes a base plate and a pole body arranged on the base plate, at least portion of the pole body being positioned in the first installation through hole, and the base plate being fixedly connected with a first connector of a corresponding connection structure in the at least one connection structure.

In some embodiments, the cover plate assembly for the battery further includes sealing members, the sealing members being positioned between inner wall surfaces of the first installation through holes and circumferential side walls of the pole bodies.

In some embodiments, the cover plate assembly for the battery further includes a separation plate connected with the top cover, the separation plate being positioned between the top cover and the base plates, and the separation plate being provided with second installation through holes corresponding to the first installation through holes for the pole bodies to penetrate.

In some embodiments, the conductive structures further include third connectors connected to the top cover, the third connectors being provided with third installation through holes corresponding to the first installation through holes; and plates connected to the third connectors, the third connectors being positioned between the top cover and the plates, the plates being provided with fourth installation through holes corresponding to the first installation through holes, and the pole bodies penetrating the second installation through holes, the first installation through holes, and the third installation through holes in sequence to be connected to inner wall surfaces of the fourth installation through holes.

In some embodiments, positioning protrusions are provided on one sides, facing the plates, of the third connectors, and the plates are provided with positioning holes, the positioning holes matching the positioning protrusions; alternatively, positioning protrusions are provided on one sides, facing the top cover, of the third connectors, and the top cover is provided with positioning holes, the positioning holes matching the positioning protrusions.

In some embodiments, the battery device includes two cells, and two sides, opposite each other, of the second connectors of the connection structures are each provided with grooves, the two grooves being arranged corresponding to the two cells, and the tabs of the cells being connected to the second connectors through the locking structures; alternatively, the tabs are provided with second assembly through holes corresponding to installation holes, the locking members penetrating the second assembly through holes to be connected to the installation holes.

In some embodiments, the battery device further includes a case connected with a top cover, the case being configured to encapsulate the cell, the connection structure, and the locking structure in the case.

In some embodiments, the battery device further includes a protective bracket connected with a separation plate of the cover plate assembly for the battery, the protective bracket being positioned in the case, the protective bracket including a bracket body and an accommodation cavity for accommodating the cell, and the bracket body being provided with a plurality of heat dissipation holes arranged in rows and columns and communicating with the accommodation cavity.

With the technical solution to the invention applied, the connection structure and the locking structure are arranged, the first end of the connection structure is connected with the pole, and the second end of the connection structure is connected with the tab of the cell through the locking structure, so that the tab of the cell is connected with the pole of the cover plate assembly for the battery through the connection structure and the locking structure, and the locking structure may enable the connection structure to be in close fit with the tab, to avoid a gap between the connection structure and the tab, thereby avoiding the problems that when the connection structures are welded to the tabs subsequently, explosion points, missing welding, incomplete welding, etc. are likely to be caused.

### Brief Description of the Drawings

The drawings of the description, which form a part of the invention, are used to provide further understanding of the invention, and the schematic embodiments of the invention and the description thereof are used to explain the invention, which are not intended to unduly limit the invention. In the accompanying drawings:
Fig. 1 shows a structural schematic diagram of a cover plate assembly for a battery in an embodiment of the invention;
Fig. 2 shows an exploded structural schematic diagram of the cover plate assembly for a battery in Fig. 1;
Fig. 3 shows an exploded structural schematic diagram of a battery device in an embodiment of the invention;
Fig. 4 shows a schematic diagram of connection structures for a cover plate assembly for a battery and cells of the battery device in Fig. 3;
Fig. 5 shows a structural schematic diagram of the battery device with the cells, the connection structures, and locking structures assembled in Fig. 3;
Fig. 6 shows an exploded structural schematic diagrams of a connection structure and a locking structure of the battery device in Fig. 3; and
Fig. 7 shows a stereo structural schematic diagram of the connection structure in Fig. 6.

In the figures, the accompanying drawings include the following reference numerals:
10. connection structure; 11. first connector; 12. second connector; 13. groove; 14. installation hole; 15. connection groove; 20. cell; 21. roll core; 22. tab; 23. second assembly through hole; 30. locking structure; 31. locking member; 311. locking body; 312. end cap; 32. clamping plate; 33. first assembly through hole; 331. first hole section; 332. second hole section; 40. top cover; 41. first installation through hole; 50. conductive structure; 51. pole; 511. base plate; 512. pole body; 52. third connector; 53. third installation through hole; 54. plate; 55. fourth installation through hole; 56. positioning protrusion; 57. positioning hole; 60. sealing member; 70. separation plate; 72. second installation through hole; 80. case; 81. protective bracket; and 82. insulation film.

### Detailed Description of the Embodiments

It should be noted that the embodiments in the invention and features in the embodiments may be combined with one another without conflict. The invention is described in detail below with reference to the accompanying drawings and the embodiments.

It should be noted that a new energy vehicle industry and an energy storage system have increasingly higher requirements on a rapid charge rate of a power battery. In practical application, a high energy density battery may extend an endurance mileage of an electric vehicle, while rapid charge rate performance of the battery may shorten a charge time. Therefore, it is of great importance to provide a rapid charge capacity and high energy density. With a capacity to shorten a charge time of a new energy vehicle, a high-rate lithium ion battery plays an irreplaceable role in promotion and application of the new energy vehicle.

However, the high-rate lithium ion battery features a poor heat dissipation capacity and a poor overcurrent capacity. Specifically, the battery is expected to generate a large amount of heat in a process of rapid charge or discharge. If the heat is not dissipated, an electrolyte and a solid electrolyte interface (SEI) film in the battery are decomposed, and positive and negative electrodes and the electrolyte are subjected to chemical reactions, so that thermal runaway of the lithium ion battery is caused, thereby affecting electrochemical performance and safety performance of the battery, and even causing battery explosion, to endanger life and property safety. In the process of rapid charge or discharge of the battery, a large current passes through connection structures. With an insufficient overcurrent bearing capacity, the connection structures fail or are fused at a high temperature, resulting in a safety problem of the battery and serious consequences. In view of the problems described above, an embodiment of the invention provides a cover plate assembly for a battery having a high heat dissipation capacity and a high current load capacity, and a battery device.

It should be noted that the cover plate assembly for the battery in the embodiment of the invention may improve a current load capacity and a heat dissipation capacity of the battery.

It should be noted that the cover plate assembly for the battery is suitable for prismatic lithium batteries, such as a lithium titanate prismatic aluminum case battery and a lithium iron phosphate prismatic aluminum case battery.

It should be noted that connection structures and tabs of the cover plate assembly for the battery in the embodiment of the invention are riveted and then subjected to laser welding, to avoid a low efficiency of an ultrasonic welding known to inventors and a tendency to damage the tabs 22 of a cell 20, and further to improve a production efficiency of the battery, thereby laying a foundation for mass production.

The inventors are aware of a connection structure adaptive to a use working condition of high-rate large-current charge and discharge. Generally, a single-layer soft connection structure is changed into a multi-layer soft connection structure, and a thickness of each layer of soft connection structures is thinned, to increase the number of layers of the soft connection structures, and improve an overcurrent bearing capacity to a certain extent. However, gaps are generated between the layers of the multi-layer soft connection structure. Therefore, when the connection structures are welded to tabs and poles, respectively, poor welding phenomena of explosion points, incomplete welding, etc. are caused. In addition, the gaps between the layers of the multi-layer soft connection structure also slow down conduction of electrons, so that service performance of the battery is affected, thereby causing a safety problem.

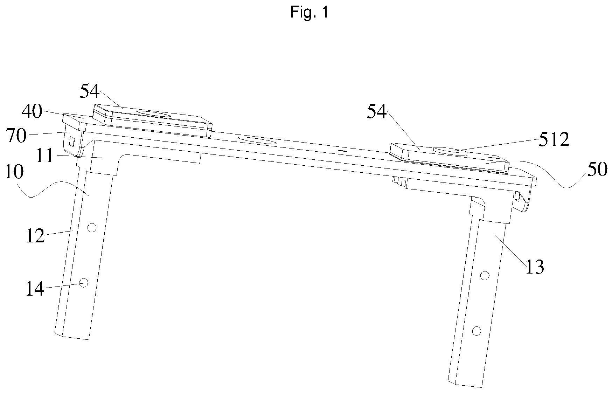

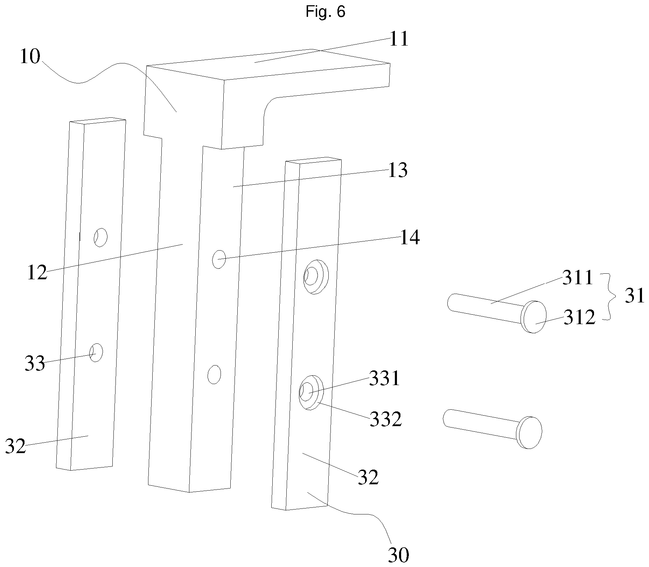

Therefore, as shown in Figs. 1 and 6, an embodiment of the invention provides a cover plate assembly for a battery. The cover plate assembly for the battery includes a top cover 40, conductive structures 50, connection structures 10, and locking structures 30, the conductive structures 50 are arranged on the top cover 40, each conductive structure 50 includes a pole 51 for conducting electricity, first ends of the connection structures 10 are electrically connected to the poles 51, second ends of the connection structures 10 are electrically connected to tabs 22 of cells 20, the second ends of the connection structures 10 are provided with installation holes 14, and the locking structures 30 include locking members 31, the locking members 31 penetrating the tabs 22 are fixedly connected to the installation holes 14, to lock the tabs 22 on the connection structures 10.

In the technical solution described above, the connection structures 10 and the locking structures 30 are arranged, the first end of each connection structure 10 is connected with a pole 51 in the poles 51, and the second end of the each connection structure 10 is connected with the tabs 22 of the cells 20 through the locking structure 30, so that the tabs 22 of the cells 20 are connected with the poles 51 through the connection structures 10 and the locking structures 30, and the locking structures 30 enable the connection structures 10 to be in close fit with the tabs 22, to avoid gaps between the connection structures 10 and the tabs 22, thereby avoiding the problems that when the connection structures 10 are welded to the tabs 22 subsequently, explosion points, missing welding, incomplete welding, etc. are likely to be caused.

Specifically, in the embodiment of the invention, each locking member 31 penetrates at least one tab 22 and is connected to the corresponding installation hole 14, to lock the at least one tab 22 on the connection structure 10, so that a current is able to flow from the at least one tab 22 to the connection structure 10 and then to the corresponding pole 51.

In the embodiment of the invention, each of the installation holes 14 is a punched hole. Certainly, in an alternative embodiment not shown in the accompanying drawings, installation holes 14 may also be threaded holes.

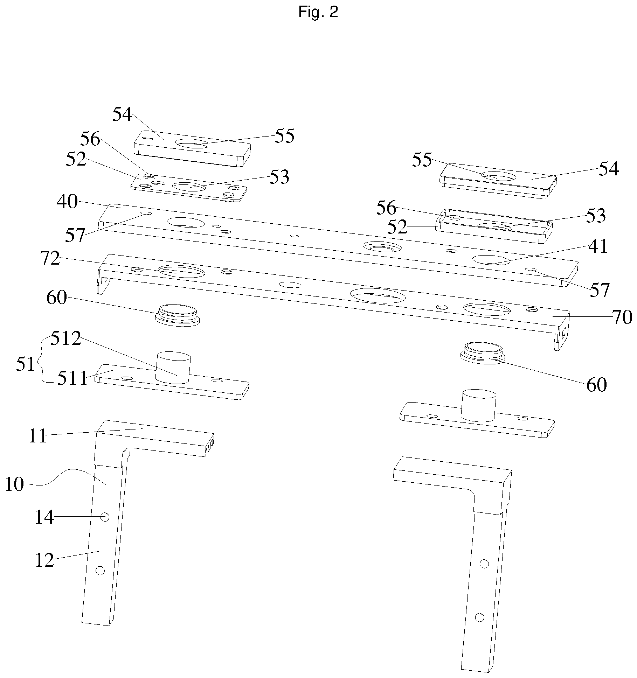

As shown in Figs. 1 and 2, in the embodiment of the invention, each of the connection structures 10 includes a first connector 11 and a second connector 12 connected to each other. An included angle is provided between the first connector 11 and the second connector 12. The first connector 11 form the first end, and the second connector 12 form the second ends.

With the arrangement described above, the first connector 11 and the second connector 12 may constitute an L-shaped connection structure. Therefore, the connection structure 10 may be suitable for a prismatic battery. The structures described above are simple and easy to assemble.

In the embodiment of the invention, the included angle between the first connector 11 and the second connector 12 is 90°. Certainly, in some othe r embodiments not shown in the accompanying drawings, the included angle between first connector 11 and second connector 12 may be another value, as long as a pole 51 and a tab 22 may be connected through the first connector 11 and the second connector 12.

It should be noted that the cover plate assembly for the battery in the embodiment of the invention is suitable for the prismatic battery, and the connection structures 10 are correspondingly set to be L-shaped. Certainly, in the alternative embodiment not shown in the accompanying drawings, connection structures 10 may also in another shape, as long as they may connect the poles 51 and the tabs 22.

In the embodiment of the invention, both the first connector 11 and the second connector 12 are block-shaped connectors. Therefore, a cross-sectional area of the connection structure 10 is increased, to improve an overcurrent capacity of the connection structure 10, thereby making the cover plate assembly for the battery adapt to the use working condition of the high-rate large-current charge and discharge.

Specifically, in the embodiment of the invention, after the second connector 12 is connected with the tab 22 through at least one locking member 31, the tab 22 may also be welded to the second connector 12, so that at least portion of the second connector 12 and the tab 22 are connected through weld joints (that is, at least portion of the second connector 12 and the tab 22 may be formed into an integral structure), to conduct the current from the weld joints to the corresponding pole 51, thereby improving the current bearing capacity of the battery. Further, a contact area between the tab 22 and the second connector 12 may also be reduced by carrying out laser welding on the tab 22 and the second connector 12, so that at least portion of the second connector 12 and the tab 22 are connected through the weld joints (that is, at least portion of the second connector 12 and the tab 22 may be formed into the integral structure). Therefore, contact resistance between the second connector 12 and the tab 22 is reduced, to reduce heat generation in an electricity conduction process, thereby improving the heat dissipation capacity of the battery. In the embodiment of the invention, the second connector 12 and the tab 22 may be connected through riveting, threads, welding, etc. In the present embodiment, in some embodiments, the second connector and the tab are riveted and then welded.

In the embodiment of the invention, the welding described above is laser welding, that is, the tab 22 and the second connector 12 is welded through a laser with a certain power.

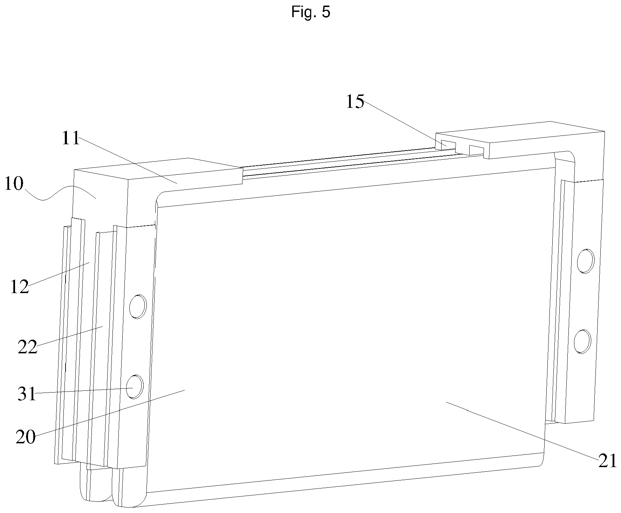

It should be noted that in the embodiment of the invention, when a length of riveted tab 22 in a left-right direction in Fig. 5 is greater than a width of the second connector 12, it is required to cut the tab 22 to length thereof equal to the width of the second connector 12, and then carry out laser welding.

In the embodiment of the invention, each of the connection structures 10 is made of metal aluminum. Certainly, in the alternative embodiment, connection structures 10 may also be made of conductive materials such as metal copper. In some embodiments, a connection structure 10 connected to a positive pole is made of metal aluminum, and a connection structure 10 connected to a negative pole is made of metal copper.

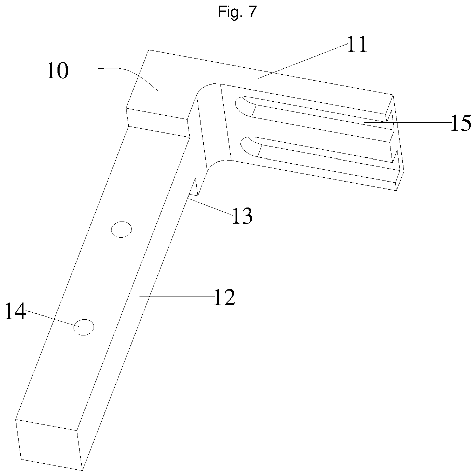

As shown in Fig. 7, in the embodiment of the invention, the first connector 11 and the second connector 12 each includes a conductive member having a predetermined thickness.

In the technical solution described above, the first connector 11 of the each connection structure 10 is connected to the pole 51, and the second connector 12 of the connection structure 10 is connected to the tabs 22 through the locking structure 30, so that the tabs 22 of the cell 20 may be connected to the pole 51 through the connection structure 10 and the locking structure 30. The first connector 11 and the second connector 12 each include the conductive members with the predetermined thicknesses, so that the cross-sectional area of the connection structure 10 may be expanded, to improve the overcurrent capacity of the connection structure 10. Large overcurrent area may be provided between the tabs 22 and the pole 51, to improve the current bearing capacity of the battery, thereby solving an insufficient current bearing capacity of a battery adopting the soft connection structures in the art known to the inventors.

In the embodiment of the invention, the predetermined thickness of the conductive member ranges from 3 mm to 15 mm.

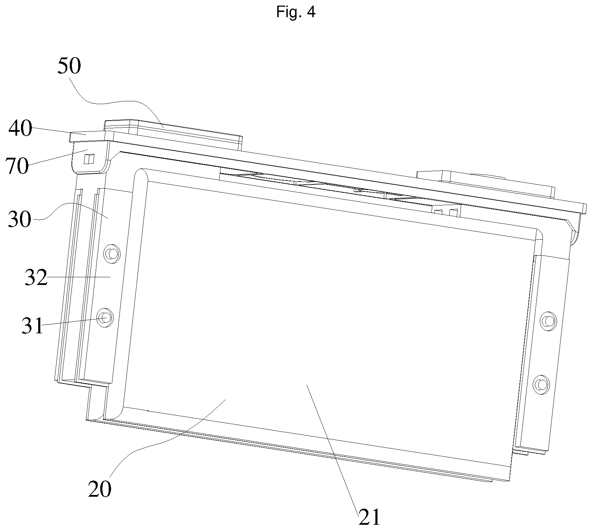

As shown in Figs. 1, 4, and 6, in the embodiment of the invention, at least one side of the second connector 12 is provided with a groove 13 for installing the tab 22.

With the arrangement described above, the tab 22 is installed in the groove 13, and the locking member 31 lock the tab 22 in the groove 13, so that one side of the tab 22 is in close fit with a bottom wall of the groove 13, to better conduct the current to the second connector 12 through the tab 22 and then to the pole 51.

As shown in Figs. 2 and 7, in the embodiment of the invention, each of the connection structures 10 further includes a connection groove 15 arranged on the first connector 11, the connection groove 15 is positioned on a sides, away from the pole 51, of the first connector 11.

With the arrangement described above, the first connector 11 is welded to the pole 51 through the connection groove 15, and the connection groove 15 is positioned on a side, away from the pole 51, of the first connector 11, to ensure close connection between the first connector 11 and the pole 51, and to avoid a situation that the gap is generated between the first connector 11 and the pole 51 to affect a welding effect, thereby avoiding affecting the performance of the battery through resulting incomplete welding or missing welding.

As shown in Figs. 5 and 6, in the embodiment of the invention, the locking structure 30 further include a clamping plate 32, the clamping plate 32 is provided with a first assembly through hole 33 corresponding to the installation hole 14, and a part of the locking member 31 penetrates the first assembly through hole 33 and the tab 22 to be riveted or connected through threaded to the installation hole 14.

In the technical solution described above, the tab 22 is pressed against the second connector 12 through the clamping plate 32, and the clamping plate 32 cover the tab 22, so that more uniform forces are applied by the locking member 31 on the tab 22, and an entire tab 22 is in close contact with the second connector 12. In one aspect, the gap between the tab 22 and the second connector 12 is avoided, to avoid the problem that when the second connector 12 is welded to the tab 22 subsequently, the explosion points, the missing welding, the incomplete welding, etc. are likely to be caused. In another aspect, the contact area between the tab 22 and the second connector 12 is increased, to avoid the gap between the tab 22 and the second connector 12, so that the current may be better circulated, the current bearing capacity of the battery is improved, to facilitate the high-rate battery charge and discharge, thereby making the cover plate assembly for the battery suitable for the high-rate lithium ion battery.

Specifically, in the embodiment of the invention, at least one side of the second connector 12 is provided with the groove 13, and the locking structure 30 includes at least one clamping plate 32, the at least one clamping plate 32 is arranged corresponding to the at least one groove 13.

In the embodiment of the invention, the first assembly through holes 33 are punched holes.

As shown in Fig. 6, in the embodiment of the invention, the locking member 31 includes a locking body 311 and an end cap 312 connected to the locking body 311, the locking body 311 has a diameter smaller than the end cap 312, a first step surface is provided between the locking body 311 and the end cap 312, and the locking body 311 is connected with the installation hole 14.

With the arrangement described above, the locking body 311 is connected to the installation hole 14 of the second connector 12, and the end cap 312 abuts against a part of the clamping plate 32, so that the tab 22 is pressed between the clamping plate 32 and the second connector 12 through the clamping plate 32, to expand the contact area between the tab 22 and the second connector 12, to avoid the gap between the tab 22 and the second connector 12, thereby avoiding the problems that when the second connector 12 is welded to the tab 22 subsequently, the explosion points, the missing welding, the incomplete welding, etc. are likely to be caused, and further to better circulate the current, to improve the current bearing capacity of the battery.

In the embodiment of the invention, the locking member 31 is a rivet. Certainly, in some embodiments not shown in the accompanying drawings, locking member 31 may also be a conductive fixing member such as a screw or a pin, as long as the locking member 31 may match the installation hole 14 to lock the tab 22 and the clamping plate 32 on the second connector 12.

In the embodiment of the invention, the locking structure 30 includes at least one group of locking members 31, the number of groups of the locking members 31 corresponding to the number of the tabs 22. One group of locking members 31 may include a plurality of locking members 31, the plurality of locking members 31 are arranged corresponding to the plurality of installation holes 14.

Specifically, in the embodiment of the invention, the second connector 12 of the connection structure 10 is connected with the tab 22 through the locking structure 30 and then through welding.

As shown in Fig. 6, in the embodiment of the invention, the first assembly through hole 33 includes a first hole section 331 and a second hole section 332 communicating with each other, the first hole section 331 has a diameter smaller than the second hole section 332, a second step surface is provided between the first hole section 331 and the second hole section 332, and the first step surface of the locking member 31 abuts against the second step surface.

With the arrangement described above, the locking body 311 penetrates the second hole section 332, the first hole section 331, and the tab 22 to be connected to the installation hole 14, at least portion of the end cap 312 is positioned in the second hole section 332, and the first step surface abuts against the second step surface, so that the locking member 31 may lock the clamping plate 32 and the tab 22 on the second connector 12.

As shown in Fig. 2, in the embodiment of the invention, the top cover 40 is provided with first installation through holes 41, and the pole 51 includes a base plate 511 and a pole body 512 arranged on the base plate 511, at least portion of the pole body 512 is positioned in the first installation through hole 41, and the base plate 511 is fixedly connected to the first connector 11 of the connection structure 10.

In the technical solution described above, a contact area between the pole 51 and the first connector 11 may be expanded through the base plate 511, and the base plate 511 is welded to the first connector 11 more conveniently, so that a over current capacity between the connection structure 10 and the pole 51 is further increased.

In the embodiment of the invention, the poles 51 include a positive pole and a negative pole. In some embodiments, the top cover 40 is provided with two first installation through holes 41 arranged corresponding to the positive and negative poles.

In the embodiment of the invention, both the positive pole and the negative pole are made of aluminum materials. Certainly, in the alternative embodiment, a positive pole and a negative pole may also be made of other conductive materials.

As shown in Fig. 2, in the embodiment of the invention, the cover plate assembly for the battery further includes a sealing member 60, the sealing member 60 is positioned between an inner wall surface of the first installation through hole 41 and a circumferential side wall of the pole body 512.

With the arrangement described above, the sealing member 60 may seal a gap between the pole 51 and the corresponding first installation through hole 41, so that in one aspect, no electrolyte in the battery may leak out, and in another aspect, moisture and impurities in air may also be prevented from entering the battery.

In the embodiment of the invention, the cover plate assembly for a battery includes two sealing members 60 arranged corresponding to the positive and the negative poles.

In the embodiment of the invention, the sealing members 60 are made of fluororubber.

As shown in Figs. 1 and 2, in the embodiment of the invention, the cover plate assembly for the battery further include a separation plate 70 connected with the top cover 40, the separation plate 70 is positioned between the top cover 40 and the base plate 511, and the partition plate 70 is provided with a second installation through hole 72 corresponding to the first installation through hole 41 for the pole body 512 to pass through.

With the arrangement described above, the separation plate 70 separates the top cover 40 from the base plate 511, to prevent the base plate 511 from making direct contact with the top cover 40 for insulation, thereby avoiding the top cover 40 from enabling electric communication between the positive and negative poles.

As shown in Fig. 2, in the embodiment of the invention, the conductive structure 50 further include third connector 52 and plate 54, the third connector 52 is connected to the top cover 40, the third connector 52 is provided with a third installation through hole 53 corresponding to the first installation through hole 41, the plate 54 is connected to the third connector 52, the third connector 52 is positioned between the top cover 40 and the plate 54, the plate 54 is provided with a fourth installation through hole 55 corresponding to the first installation through hole 41, and the pole body 512 penetrates the second installation through hole 72, the first installation through hole 41, and the third installation through hole 53 in sequence to be connected to inner wall surface of the fourth installation through hole 55.

In the technical solution described above, the plate 54 may be connected to a power supply or an electric device, to charge and discharge the battery.

Specifically, in the embodiment of the invention, the conductive structure 50 includes a positive plate as well as a negative plate and two third connectors 52 arranged corresponding to the positive pole and the negative pole, so that the two third connectors 52 may separate the two plates 54 from the top cover 40, to avoid electric communication between the positive plate and the negative plate through the top cover 40.

In embodiment of the invention, both the positive plate and the negative plate are made of aluminum materials. Certainly, in the alternative embodiment, a positive plate and a negative plate may also be made of other conductive materials.

In the embodiment of the invention, a third connector 52 corresponding to the positive plate is made of an insulation material, in some embodiments, one of polypropylene (PP), polyphenylene sulfide (PPS), acrylonitrile butadiene styrene (ABS), polyester resin (PET), etc. and a third connector 52 corresponding to the negative plate is made of a conductive material, in some embodiments, is a stainless steel.

In the embodiment of the invention, the third connector 52 corresponding to the positive plate is of a connection block structure, so that a creepage distance may be prolonged.

As shown in Fig. 2, in the embodiment of the invention, a positioning protrusion 56 is provided on a side, facing the plate 54, of the third connector 52, and the plate 54 is provided with a positioning hole 57, the positioning hole 57 is cooperated with the positioning protrusion 56.

With the arrangement described above, the plate 54 is accurately assembled on the third connector 52, to ensure that the third installation through hole 53 on the third connector 52 and the fourth installation through hole 55 on the plate 54 are coaxially arranged, so that the pole body 512 may better penetrate the third installation through hole 53 to be connected to the fourth installation through hole 55.

As shown in Fig. 2, in the embodiment of the invention, a positioning protrusion 56 is provided on a side, facing the top cover 40, of the third connector 52, and the top cover 40 is provided with positioning hole 57, the positioning hole 57 is cooperated with the positioning protrusion 56.

With the arrangement described above, the third connector 52 is accurately assembled on the top cover 40, to ensure that the third installation through hole 53 on the third connector 52 and the first installation through hole 41 on the top cover 40 are coaxially arranged, so that the pole body 512 may better penetrate the first installation through hole 41 and then penetrate the third installation through hole 53.

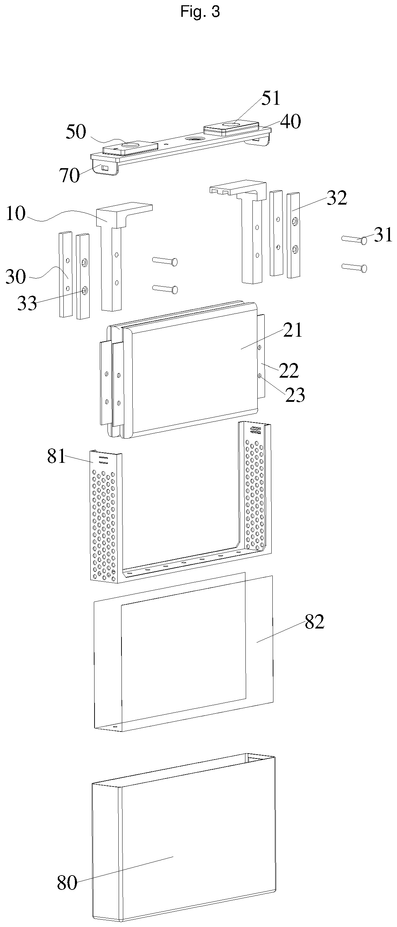

As shown in Fig. 3, the embodiment of the invention provides a battery device. The battery device includes a cell 20 and the above cover plate assembly for the battery connected to the cell 20, the cell 20 including a roll core 21 and at least one tab 22 connected to the roll core 21, and the at least one tab 22 is connected to pole 51 through connection structure 10 and locking structure 30. The battery device described above has all advantages of the cover plate assembly for a battery described above, which will not be described in detail herein.

As shown in Fig. 5, in the embodiment of the invention, the cells 20 include two tabs 22 connected to the roll cores 21, and the cover plate assembly for a battery includes two connection structures 10, all the tabs 22 are connected to corresponding second connectors 12 through the locking structures 30. With the arrangement described above, a locking structure 30 and a connection structure 10 of one cover plate assembly for a battery may connect one tab (such as a positive tab) to one pole 51 (such as a positive pole), and a locking structure 30 and a connection structure 10 of another cover plate assembly for a battery may connect another tab (such as a negative tab) to another pole (such as a negative pole), to form one conductive path.

In the embodiment of the invention, the cells 20 are winding type cells, and made of ternary lithium or lithium titanate.

As shown in Fig. 3, 5, and 6, in the embodiment of the invention, the battery device includes two cells 20, and two sides, opposite each other, of the second connector 12 of the connection structure 10 are each provided with the groove 13, two grooves 13 are arranged corresponding to the two cells 20, and the tabs 22 of the cells 20 are connected to the second connectors 12 through the locking structures 30.

With the arrangement described above, one connection structure 10 may connect tabs 22 with the same polarity of two cells 20, so that the two cells 20 may be arranged in parallel, to reduce internal resistance of the battery device to 50% of original internal resistance, and the battery device generates less heat under the same electric quantity, which is beneficial to improvement of electrochemical performance of the battery device.

Specifically, as shown in Fig. 3, in the embodiment of the invention, the tab 22 is provided with a second assembly through hole 23 corresponding to the installation hole 14, the locking member 31 penetrating the second assembly through hole 23 to be connected to the installation hole 14.

In the embodiment of the invention, the second assembly through hole 23 is a punched hole, which is conducive to subsequent riveting to the connection structure 10.

In the embodiment of the invention, the tab 22 may be shaped by a punch during a process of assembling the tab 22 on the connection structure 10, to make surface of the tab 22 more flat, and further to make the tab 22 better make contact with the connection structure 10.

In the embodiment of the invention, the first assembly through hole 33, the second assembly through hole 23, and the installation hole 14 are coaxially arranged.

As shown in Fig. 3, in the embodiment of the invention, the battery device further includes a case 80 connected with the top cover 40, to encapsulate the cell 20, the connection structure 10, and the locking structure 30 in the case 80.

With the arrangement described above, it is possible to prevent the electrolyte in the battery device from leaking out or prevent moisture and impurities in air from entering the battery.

In the embodiment of the invention, the case 80 is made of aluminum with low density and excellent welding performance. Certainly, in the alternative embodiment, a case 80 may be made of another metal material.

As shown in Fig. 3, in the embodiment of the invention, the battery device further includes a protective bracket 81 connected with a separation plate 70 of the cover plate assembly for the battery, the protective bracket 81 is positioned in the case 80, the protective bracket 81 includes a bracket body and an accommodating cavity for accommodating the cell 20, and the bracket body is provided with a plurality of heat dissipation holes arranged in rows and columns and communicating with the accommodating cavity.

In the technical solution described above, the protective bracket 81 is connected with the separation plate 70, to prevent the cell 20 and a portion, connected with the cell 20, of the cover plate assembly for the battery from shaking in the case 80. Further, the protective bracket 81 is provided with the plurality of heat dissipation holes arranged in rows and columns, to enhance the heat dissipation capacity of the battery and reduce a weight of the protective bracket 81, to increase energy density of the battery device.

Specifically, in the embodiment of the invention, the protective bracket 81 may support, protect, and insulate the cells. In some embodiments, the protective bracket 81 may be made of any one of polyphenylene sulfide (PPS), acrylonitrile butadiene styrene (ABS), polypropylene (PP), polyester resin (PET), polyfluoroalkoxy (PFA), etc. which feature resistance to corrosion of the electrolyte, an excellent insulation property, an excellent dielectric property, resistance to a high temperature, and good flame retardancy.

In the embodiment of the invention, the protective bracket 81 is made of a PP material added with a certain flame retardant.

In the embodiment of the invention, the protective bracket 81 is of a U-shaped structure, to coat the cells 20, the connection structures 10, and the locking structures 30.

As shown in Fig. 3, in the embodiment of the invention, the top cover 40 is further provided with an explosion-proof hole, and the cover plate assembly for the battery further includes an explosion-proof valve, the explosion-proof valve is positioned in the explosion-proof hole.

With the arrangement described above, the explosion-proof valve may be used for gas pressure safety protection. If the battery device is inflated when in use, and a gas pressure in the battery device is greater than a bearable pressure when the explosion-proof valve explodes, the explosion-proof valve is expected to explodes, so that a problem the battery device explodes due to an overlarge internal gas pressure is prevented.

In the embodiment of the invention, the explosion-proof valve is made of an aluminum material, to facilitate laser welding.

As shown in Fig. 3, in the embodiment of the invention, the top cover 40 is further provided with a liquid injection hole, and the cover plate assembly for a battery further includes a sealing nail, at least a portion of the sealing nail is positioned in the liquid injection hole.

With the arrangement described above, the liquid injection hole is sealed by the sealing nail after a liquid is injected.

In the embodiment of the invention, the sealing nail may be made of PP, PPS, ABS, PET, etc.

In the embodiment of the invention, the battery device further includes an insulation film 82 coating an outer side of the protective bracket 81 for insulation. In some embodiments, the insulation film 82 is a mylar film.

It may be seen from the above description that the embodiments of the invention have the technical effects as follows: the connection structure and the locking structure are arranged, the first end of the connection structure is connected with the pole, and the second end of the connection structure is connected with the tab of the cell through the locking structure, so that the tab of the cell is connected with the pole of the cover plate assembly for a battery through the connection structure and the locking structure, and the locking structure may enable the connection structure to be in close fit with the tab, to avoid a gap between the connection structure and the tab, thereby avoiding the problem that when the connection structure is welded to the tab subsequently, the explosion points, the missing welding, the incomplete welding, etc. are likely to be caused.

## Claims

1. A battery device, comprising a cell (20) and a cover plate assembly for the battery connected with the cell (20), wherein the cell (20) comprises roll cores (21) and tabs (22) connected with the roll cores (21), wherein the cover plate assembly for the battery comprises:
a top cover (40);
a conductive structure (50) arranged on the top cover (40), the conductive structure (50) comprising at least one pole (51) for conducting electricity;
at least one connection structure (10), a first end of each connection structure (10) being electrically connected with a corresponding pole (51) in the at least one pole (51), a second end of the each connection structure (10) being electrically connected with a tab (22) of the cell (20), and the second end of the each connection structure (10) being provided with an installation hole (14), wherein the each connection structure (10) comprises a first connector (11) and a second connector (12) connected to each other, an included angle being provided between the first connector (11) and the second connector (12), the first connector (11) forming the first end, and the second connector (12) forming the second end, at least one side of the second connector (12) is provided with a groove (13) for installing the tab (22); and
a locking structure (30) comprising at least one locking member (31), each locking member (31) penetrating the tab (22) to be fixedly connected with the installation hole (14), to lock the tab (22) on the connection structure (10) correspondingly, the tabs (22) being connected with the poles (51) through connection structures (10) and the locking structure (30).

2. The battery device as claimed in claim 1, wherein both of the first connector (11) and the second connector (12) comprise conductive members having predetermined thicknesses; or
the each connection structure (10) further comprises a connection groove (15) arranged on the first connector (11), the connection groove (15) being positioned on a side, away from the pole (51), of the first connector (11).

3. The battery device as claimed in claims 1 or 2, wherein the each locking member (31) comprises a locking body (311) and an end cap (312) connected with the locking body (311), the locking body (311) having a diameter smaller than the end cap (312), a first step surface being provided between the locking body (311) and the end cap (312), and the locking body (311) being connected with the installation hole (14); or, the second connector (12) of the connection structure (10) is welded to the tab (22).

4. The battery device as claimed in claims 1 or 2, wherein the locking structure (30) further comprises a clamping plate (32), the clamping plate (32) being provided with a first assembly through hole (33) corresponding to the installation hole (14), and a part of the each locking member (31) penetrating the first assembly through hole (33) and the tab (22) to be riveted or connected through threads to the installation hole (14).

5. The battery device as claimed in claim 4, wherein the first assembly through hole (33) comprises a first hole section (331) and a second hole section (332) communicating with each other, the first hole section (331) having a diameter smaller than the second hole section (332), a second step surface being provided between the first hole section (331) and the second hole section (332), and a first step surface of a corresponding locking member in the locking members (31) abutting against the second step surface.

6. The battery device as claimed in claims 1 or 2, wherein the top cover (40) is provided with at least one first installation through hole (41), and each pole (51) comprises a base plate (511) and a pole body (512) arranged on the base plate (511), at least portion of the pole body (512) being positioned in a corresponding first installation through hole (41), and the base plate (511) being fixedly connected with a first connector (11) of a corresponding connection structure in the at least one connection structure (10).

7. The battery device as claimed in claim 6, further comprising a sealing member (60), the sealing member (60) being positioned between an inner wall surface of each first installation through hole (41) and a circumferential side wall of pole body (512).

8. The battery device as claimed in claim 6, further comprising a separation plate (70) connected with the top cover (40), the separation plate (70) being positioned between the top cover (40) and the base plates (511), and the separation plate (70) being provided with at least one second installation through hole (72) corresponding to the at least one first installation through hole (41) for at least one pole body (512) to pass through.

9. The battery device as claimed in claim 8, wherein the conductive structure (50) further comprises:
third connectors (52) connected to the top cover (40), each third connector (52) being provided with at least one third installation through hole (53) corresponding to the at least one first installation through hole (41); and
plates (54) connected with the third connectors (52), each third connector (52) being positioned between the top cover (40) and a corresponding plate (54), each plate (54) being provided with a fourth installation through hole (55) corresponding to the at least one first installation through hole (41), and the pole body (512) penetrating a corresponding second installation through hole (72), the first installation through hole (41), and the third installation through hole (53) in sequence to be connected with an inner wall surface of the fourth installation through hole (55).

10. The battery device as claimed in claim 9, wherein positioning protrusions (56) are provided on sides, facing the plates (54), of the third connectors (52), and the plates (54) are provided with positioning holes (57), the positioning holes (57) cooperating with the positioning protrusions (56); or, positioning protrusions (56) are provided on sides, facing the top cover (40), of the third connectors (52), and the top cover (40) is provided with positioning holes (57), the positioning holes (57) cooperating with the positioning protrusions (56).

11. The battery device as claimed in any one of claims 1-10, comprising the two cells (20), wherein two sides, opposite each other, of the second connectors (12) of the connection structures (10) are each provided with grooves (13), the two grooves (13) being arranged corresponding to the two cells (20), and the tabs (22) of the cells (20) being connected with the second connectors (12) through the locking structures (30); or, the tabs (22) are provided with second assembly through holes (23) corresponding to installation holes (14), locking members (31) penetrating the second assembly through holes (23) to be connected to the installation holes (14).

12. The battery device as claimed in any one of claims 1-10, further comprising a case (80) connected with the top cover (40), the case being configured to encapsulate the cell (20), the connection structure (10), and the locking structure (30) in the case (80).

13. The battery device as claimed in claim 12, further comprising a protective bracket (81) connected with a separation plate (70) of the cover plate assembly for the battery, wherein the protective bracket (81) is positioned in the case(80), the protective bracket (81) comprising a bracket body and an accommodation cavity for accommodating the cell (20), and the bracket body being provided with a plurality of heat dissipation holes arranged in rows and columns and communicating with the accommodation cavity.

## Patentansprüche

1. Batterievorrichtung, umfassend eine Zelle (20) und eine Abdeckplattenanordnung für die Batterie, die mit der Zelle (20) verbunden ist, wobei die Zelle (20) Rollenkerne (21) und Laschen (22) umfasst, die mit den Rollenkernen (21) verbunden sind, wobei die Abdeckplattenanordnung für die Batterie Folgendes umfasst:
eine obere Abdeckung (40),
eine leitfähige Struktur (50), die auf der oberen Abdeckung (40) angeordnet ist, wobei die leitfähige Struktur (50) mindestens einen Pol (51) zum Leiten von Elektrizität umfasst,
mindestens eine Verbindungsstruktur (10), wobei ein erstes Ende jeder Verbindungsstruktur (10) elektrisch mit einem entsprechenden Pol (51) in dem mindestens einen Pol (51) verbunden ist, wobei ein zweites Ende jeder Verbindungsstruktur (10) elektrisch mit einer Lasche (22) der Zelle (20) verbunden ist, und wobei das zweite Ende jeder Verbindungsstruktur (10) mit einem Installationsloch (14) versehen ist, wobei jede Verbindungsstruktur (10) einen ersten Verbinder (11) und einen zweiten Verbinder (12) umfasst, die miteinander verbunden sind, wobei ein eingeschlossener Winkel zwischen dem ersten Verbinder (11) und dem zweiten Verbinder (12) bereitgestellt ist, wobei der erste Verbinder (11) das erste Ende bildet und der zweite Verbinder (12) das zweite Ende bildet, wobei mindestens eine Seite des zweiten Verbinders (12) mit einer Nut (13) zum Installieren der Lasche (22) versehen ist, und
eine Verriegelungsstruktur (30), die mindestens ein Verriegelungsglied (31) umfasst, wobei jedes Verriegelungsglied (31) durch die Lasche (22) geht, um fest mit dem Installationsloch (14) verbunden zu werden, um die Lasche (22) an der Verbindungsstruktur (10) entsprechend zu verriegeln, wobei die Laschen (22) über Verbindungsstrukturen (10) und die Verriegelungsstruktur (30) mit den Polen (51) verbunden sind.

2. Batterievorrichtung nach Anspruch 1, wobei sowohl der erste Verbinder (11) als auch der zweite Verbinder (12) leitfähige Glieder mit vorbestimmten Dicken umfassen, oder
jede Verbindungsstruktur (10) ferner eine Verbindungsnut (15) umfasst, die an dem ersten Verbinder (11) angeordnet ist, wobei die Verbindungsnut (15) an einer von dem Pol (51) abgewandten Seite des ersten Verbinders (11) positioniert ist.

3. Batterievorrichtung nach Anspruch 1 oder 2, wobei jedes Verriegelungsglied (31) einen Verriegelungskörper (311) und eine Endkappe (312) umfasst, die mit dem Verriegelungskörper (311) verbunden ist, wobei der Verriegelungskörper (311) einen Durchmesser aufweist, der kleiner als die Endkappe (312) ist, wobei eine erste Stufenfläche zwischen dem Verriegelungskörper (311) und der Endkappe (312) vorgesehen ist und der Verriegelungskörper (311) mit dem Installationsloch (14) verbunden ist, oder der zweite Verbinder (12) der Verbindungsstruktur (10) mit der Lasche (22) verschweißt ist.

4. Batterievorrichtung nach Anspruch 1 oder 2, wobei die Verriegelungsstruktur (30) ferner eine Klemmplatte (32) umfasst, wobei die Klemmplatte (32) mit einem ersten Montagedurchgangsloch (33) versehen ist, das dem Installationsloch (14) entspricht, und ein Teil jedes Verriegelungsglieds (31) durch das erste Montagedurchgangsloch (33) und die Lasche (22) geht, um vernietet oder durch ein Gewinde mit dem Installationsloch (14) verbunden zu werden.

5. Batterievorrichtung nach Anspruch 4, wobei das erste Montagedurchgangsloch (33) einen ersten Lochabschnitt (331) und einen zweiten Lochabschnitt (332) umfasst, die miteinander kommunizieren, wobei der erste Lochabschnitt (331) einen Durchmesser aufweist, der kleiner als der zweite Lochabschnitt (332) ist, wobei eine zweite Stufenfläche zwischen dem ersten Lochabschnitt (331) und dem zweiten Lochabschnitt (332) vorgesehen ist, und eine erste Stufenfläche eines entsprechenden Verriegelungsglieds in den Verriegelungsgliedern (31) an der zweiten Stufenfläche anliegt.

6. Batterievorrichtung nach Anspruch 1 oder 2, wobei die obere Abdeckung (40) mit mindestens einem ersten Installationsdurchgangsloch (41) versehen ist und jeder Pol (51) eine Grundplatte (511) und einen Polkörper (512) umfasst, der auf der Grundplatte (511) angeordnet ist, wobei mindestens ein Abschnitt des Polkörpers (512) in einem entsprechenden ersten Installationsdurchgangsloch (41) positioniert ist, und wobei die Grundplatte (511) fest mit einem ersten Verbinder (11) einer entsprechenden Verbindungsstruktur in der mindestens einen Verbindungsstruktur (10) verbunden ist.

7. Batterievorrichtung nach Anspruch 6, ferner umfassend ein Dichtungselement (60), wobei das Dichtungselement (60) zwischen einer Innenwandfläche jedes ersten Installationsdurchgangslochs (41) und einer Umfangsseitenwand des Polkörpers (512) positioniert ist.

8. Batterievorrichtung nach Anspruch 6, ferner umfassend eine Trennplatte (70), die mit der oberen Abdeckung (40) verbunden ist, wobei die Trennplatte (70) zwischen der oberen Abdeckung (40) und den Basisplatten (511) positioniert ist und die Trennplatte (70) mit mindestens einem zweiten Installationsdurchgangsloch (72) versehen ist, das dem mindestens einen ersten Installationsdurchgangsloch (41) entspricht, durch das mindestens ein Polkörper (512) hindurchgehen kann.

9. Batterievorrichtung nach Anspruch 8, wobei die leitfähige Struktur (50) ferner Folgendes umfasst:
dritte Verbinder (52), die mit der oberen Abdeckung (40) verbunden sind, wobei jeder dritte Verbinder (52) mit mindestens einem dritten Installationsdurchgangsloch (53) versehen ist, das dem mindestens einen ersten Installationsdurchgangsloch (41) entspricht, und
Platten (54), die mit den dritten Verbindern (52) verbunden sind, wobei jeder dritte Verbinder (52) zwischen der oberen Abdeckung (40) und einer entsprechenden Platte (54) positioniert ist, wobei jede Platte (54) mit einem vierten Installationsdurchgangsloch (55) versehen ist, das dem mindestens einen ersten Installationsdurchgangsloch (41) entspricht, und der Polkörper (512) nacheinander durch ein entsprechendes zweites Installationsdurchgangsloch (72), das erste Installationsdurchgangsloch (41) und das dritte Installationsdurchgangsloch (53) geht, um mit einer Innenwandfläche des vierten Installationsdurchgangslochs (55) verbunden zu werden.

10. Batterievorrichtung nach Anspruch 9, wobei Positionierungsvorsprünge (56) an den Platten (54) zugewandten Seiten der dritten Verbinder (52) vorgesehen sind und die Platten (54) mit Positionierungslöchern (57) versehen sind, wobei die Positionierungslöcher (57) mit den Positionierungsvorsprüngen (56) zusammenwirken, oder an der oberen Abdeckung (40) zugewandten Seiten der dritten Verbinder (52) Positionierungsvorsprünge (56) vorgesehen sind und die obere Abdeckung (40) mit Positionierungslöchern (57) versehen ist, wobei die Positionierungslöcher (57) mit den Positionierungsvorsprüngen (56) zusammenwirken.

11. Batterievorrichtung nach einem der Ansprüche 1 - 10, umfassend die zwei Zellen (20), wobei zwei einander gegenüberliegende Seiten der zweiten Verbinder (12) der Verbindungsstrukturen (10) jeweils mit Nuten (13) versehen sind, wobei die zwei Nuten (13) entsprechend den zwei Zellen (20) angeordnet sind und die Laschen (22) der Zellen (20) durch die Verriegelungsstrukturen (30) mit den zweiten Verbindern (12) verbunden sind, oder die Laschen (22) mit zweiten Montagedurchgangslöchern (23) versehen sind, die den Installationslöchern (14) entsprechen, wobei die Verriegelungsglieder (31) durch die zweiten Montagedurchgangslöcher (23) gehen, um mit den Installationslöchern (14) verbunden zu werden.

12. Batterievorrichtung nach einem der Ansprüche 1 - 10, ferner umfassend ein Gehäuse (80), das mit der oberen Abdeckung (40) verbunden ist, wobei das Gehäuse dazu ausgestaltet ist, die Zelle (20), die Verbindungsstruktur (10) und die Verriegelungsstruktur (30) in dem Gehäuse (80) einzukapseln.

13. Batterievorrichtung nach Anspruch 12, ferner umfassend eine Schutzhalterung (81), die mit einer Trennplatte (70) der Abdeckplattenanordnung für die Batterie verbunden ist, wobei die Schutzhalterung (81) in dem Gehäuse (80) positioniert ist, wobei die Schutzhalterung (81) einen Halterungskörper und einen Aufnahmehohlraum zum Aufnehmen der Zelle (20) umfasst und der Halterungskörper mit einer Vielzahl von Wärmeableitungslöchern versehen ist, die in Reihen und Spalten angeordnet sind und mit dem Aufnahmehohlraum in Verbindung stehen.

## Revendications

1. Dispositif de batterie, comprenant un élément de batterie (20) et un ensemble formant couvercle pour la batterie raccordé à l'élément de batterie (20), l'élément de batterie (20) comprenant des noyaux enroulés (21) et des ailettes (22) raccordées aux noyaux enroulés (21), l'ensemble formant couvercle pour la batterie comprenant :
un couvercle supérieur (40) ;
une structure conductrice (50) située sur le couvercle supérieur (40), la structure conductrice (50) comprenant au moins un pôle (51) pour conduire l'électricité ;
au moins une structure de raccordement (10), une première extrémité de chaque structure de raccordement (10) étant raccordée électriquement à un pôle correspondant (51) de l'au moins un pôle (51), une seconde extrémité de chaque structure de raccordement (10) étant raccordée électriquement à une ailette (22) de l'élément de batterie (20), et la seconde extrémité de chaque structure de raccordement (10) étant pourvue d'un trou d'installation (14), chaque structure de raccordement (10) comprenant un premier raccord (11) et un deuxième raccord (12) raccordés l'un à l'autre, un angle inclus étant défini entre le premier raccord (11) et le deuxième raccord (12), le premier raccord (11) formant la première extrémité, et le deuxième raccord (12) formant la seconde extrémité, au moins un côté du deuxième raccord (12) étant pourvu d'une rainure (13) pour installer l'ailette (22) ; et
une structure de blocage (30) comprenant au moins un élément de blocage (31), chaque élément de blocage (31) pénétrant dans l'ailette (22) pour être raccordé fixement au trou d'installation (14), afin de bloquer respectivement l'ailette (22) sur la structure de raccordement (10), les ailettes (22) étant raccordées aux pôles (51) par le biais des structures de raccordement (10) et de la structure de blocage (30).

2. Dispositif de batterie selon la revendication 1, dans lequel le premier raccord (11) et le deuxième raccord (12) comprennent tous deux des éléments conducteurs présentant des épaisseurs prédéterminées ; ou
chaque structure de raccordement (10) comprend, en outre, une rainure de raccordement (15) formée sur le premier raccord (11), la rainure de raccordement (15) étant située sur un côté, à l'opposé du pôle (51), du premier raccord (11).

3. Dispositif de batterie selon la revendication 1 ou 2, dans lequel chaque élément de blocage (31) comprend un corps de blocage (311) et une coiffe d'extrémité (312) raccordée au corps de blocage (311), le corps de blocage (311) présentant un diamètre inférieur à celui de la coiffe d'extrémité (312), une première surface formant épaulement étant définie entre le corps de blocage (311) et la coiffe d'extrémité (312), et le corps de blocage (311) étant raccordé au trou d'installation (14) ; ou le deuxième raccord (12) de la structure de raccordement (10) est soudé à l'ailette (22).

4. Dispositif de batterie selon la revendication 1 ou 2, dans lequel la structure de blocage (30) comprend, en outre, une plaque de serrage (32), la plaque de serrage (32) étant pourvue d'un premier trou traversant d'assemblage (33) correspondant au trou d'installation (14), et une partie de chaque élément de blocage (31) pénétrant dans le premier trou traversant d'assemblage (33) et l'ailette (22) pour être rivé ou vissé au trou d'installation (14).

5. Dispositif de batterie selon la revendication 4, dans lequel le premier trou traversant d'assemblage (33) comprend une première section de trou (331) et une seconde section de trou (332) communiquant l'une avec l'autre, la première section de trou (331) présentant un diamètre inférieur à celui de la seconde section de trou (332), une seconde surface formant épaulement étant définie entre la première section de trou (331) et la seconde section de trou (332), et une première surface formant épaulement d'un élément de blocage correspondant des éléments de blocage (31) venant en appui contre la seconde surface formant épaulement.

6. Dispositif de batterie selon la revendication 1 ou 2, dans lequel le couvercle supérieur (40) est pourvu d'au moins un premier trou traversant d'installation (41), et chaque pôle (51) comprend une plaque de base (511) et un corps de pôle (512) situé sur la plaque de base (511), au moins une partie du corps de pôle (512) étant placée dans un premier trou traversant d'installation (41) correspondant, et la plaque de base (511) étant raccordée fixement à un premier raccord (11) d'une structure de raccordement correspondante de l'au moins une structure de raccordement (10).

7. Dispositif de batterie selon la revendication 6, comprenant, en outre, un élément d'étanchéité (60), l'élément d'étanchéité (60) étant placé entre une surface de paroi intérieure de chaque premier trou traversant d'installation (41) et une paroi latérale circonférentielle du corps de pôle (512).

8. Dispositif de batterie selon la revendication 6, comprenant, en outre, une plaque de séparation (70) raccordée au couvercle supérieur (40), la plaque de séparation (70) étant placée entre le couvercle supérieur (40) et les plaques de base (511), et la plaque de séparation (70) étant pourvue d'au moins un deuxième trou traversant d'installation (72) correspondant à l'au moins un premier trou traversant d'installation (41) destiné à être traversé par au moins un corps de pôle (512).

9. Dispositif de batterie selon la revendication 8, dans lequel la structure conductrice (50) comprend en outre :
des troisièmes raccords (52) raccordés au couvercle supérieur (40), chaque troisième raccord (52) étant pourvu d'au moins un troisième trou traversant d'installation (53) correspondant à l'au moins un premier trou traversant d'installation (41) ; et
des plaques (54) raccordées aux troisièmes raccords (52), chaque troisième raccord (52) étant placé entre le couvercle supérieur (40) et une plaque correspondante (54), chaque plaque (54) étant pourvue d'un quatrième trou traversant d'installation (55) correspondant à l'au moins un premier trou traversant d'installation (41), et le corps de pôle (512) pénétrant dans un deuxième trou traversant d'installation correspondant (72), le premier trou traversant d'installation (41), et le troisième trou traversant d'installation (53) successivement pour être raccordé à une surface de paroi intérieure du quatrième trou traversant d'installation (55).

10. Dispositif de batterie selon la revendication **9,** dans lequel des saillies de positionnement (56) sont situées sur des côtés, faisant face aux plaques (54), des troisièmes raccords (52), et les plaques (54) sont pourvues de trous de positionnement (57), les trous de positionnement (57) coopérant avec les saillies de positionnement (56) ; ou des saillies de positionnement (56) sont situées sur des côtés, faisant face au couvercle supérieur (40), des troisièmes raccords (52), et le couvercle supérieur (40) est pourvu de trous de positionnement (57), les trous de positionnement (57) coopérant avec les saillies de positionnement (56).

11. Dispositif de batterie selon l'une quelconque des revendications 1 à 10, comprenant les deux éléments de batterie (20), dans lequel deux côtés, opposés l'un à l'autre, des deuxièmes raccords (12) des structures de raccordement (10) sont chacun pourvus de rainures (13), les deux rainures (13) étant formées d'une manière correspondant aux deux éléments de batterie (20), et les ailettes (22) des éléments de batterie (20) étant raccordées aux deuxièmes raccords (12) par le biais des structures de blocage (30) ; ou les ailettes (22) sont pourvues de deuxièmes trous traversants d'assemblage (23) correspondant aux trous d'installation (14), des éléments de blocage (31) pénétrant dans les deuxièmes trous traversants d'assemblage (23) pour être raccordés aux trous d'installation (14).

12. Dispositif de batterie selon l'une quelconque des revendications 1 à 10, comprenant, en outre, un carter (80) raccordé au couvercle supérieur (40), le carter étant conçu pour envelopper l'élément de batterie (20), la structure de raccordement (10), et la structure de blocage (30) dans le carter (80).

13. Dispositif de batterie selon la revendication 12, comprenant, en outre, un support protecteur (81) raccordé à une plaque de séparation (70) de l'ensemble formant couvercle pour la batterie, dans lequel le support protecteur (81) est placé dans le carter (80), le support protecteur (81) comprenant un corps de support et une cavité de réception destinée à recevoir l'élément de batterie (20), et le corps de support étant pourvu d'une pluralité de trous de dissipation de chaleur formés en rangées et colonnes et communiquant avec la cavité de réception.
